# EUROPEAN PATENT SPECIFICATION

(11) **EP 2 548 474 B1**
(45) Date of publication and mention of the grant of the patent: **20.08.2014**
(21) Application number: 12188726.9
(22) Date of filing: 03.07.2007
(51) Int. Cl.: A47C 27/08

(54) **Single use air mattress**
Einweg Luftmatratze
Matelas gonflable jettable

(30) Priority: 05.07.2006 US 806587 P
(43) Date of publication of application: 23.01.2013
(62) Divisional of application: 07812589.5
(73) Proprietor: Woodlark Circle, Inc., Bethlehem, PA 18018 (US)
(72) Inventor: Davis, David T., Bethlehem, PA 18018 (US); Apicelli, Samuel W., Bryn Mawr, PA 19010 (US)
(74) Representative: Leonhard, Frank Reimund

(56) References cited:
- US-A- 4 272 856
- US-A- 4 528 704
- US-A1- 2006 021 133

## Description

The present invention generally relates to patient transfer devices and, more particularly to a single patient, personal use patient transfer apparatus which employs an air bearing to facilitate the transfer.

Patient handling mattresses are known in the art which include at least two flexible material sheets, that together define a plenum chamber, with at least one sheet being perforated with small pinholes over at least a central surface area, and which open up directly to the interior of the plenum chamber. Such prior art mattresses are used by arranging the perforated sheet so that it faces an underlying fixed, generally planar support surface, such as a floor or table. When the mattress is charged with pressurized air, the escape of air under pressure through the pinholes acts initially to jack a load placed upon the mattress above the perforated flexible sheet, and thereby creates an air bearing of relatively small height between the underlying fixed, generally planar support surface and the perforated flexible sheet.

For example, in U. S. Patent No. 4,517, 690, issued to Wegener, an air pallet is disclosed that is formed from upper and lower thin flexible film sheets sealed at their edges to form a plenum chamber. Wegener's air pallet functions to move a load with minimal friction over an underlying generally planar fixed support surface. The bottom thin flexible material sheet is perforated by small diameter perforations such as pin holes at the load imprint area.

In U. S. Patent No. 5,561,873, issued to Weedling, provides an inflatable flexible pallet within which an array of structurally interrelated inflatable chambers are formed to support a load when inflated. The flexible pallet is configured to resist lateral and longitudinal shrinkage of the load support surface, as well as ballooning and hot dogging. Rotational instability is also reduced by providing a greater load surface support area.

In U.S. Patent No. 6,073,291, issued to Davis, an inflatable medical patient transfer apparatus is disclosed that has a combination of transverse partition members and a raised perimeter section to reduce deleterious ballooning and uneven inflation as well as quick emergency deflation. Additional differentially inflatable patient rolling chambers are disclosed on the top of the transfer apparatus to provide assistance to medical personnel in beginning to roll patients reclining or lying upon the transfer apparatus, particularly in a deflated condition on a hospital bed.

All of the foregoing devices have needed to be cleaned after each use so as to prevent transmission of disease from their patient engaging surfaces, since they are all intended for multiple uses with multiple patients. Reusable mattresses need to have the material on their outer surfaces that contacts the patient be readily washable, and also be non-absorbent, since patients often experience loss of bodily fluids. None of the foregoing prior art transfer mattresses are appropriate for assuring single use by and personal to a single patient since all are susceptible to some cleaning that would mask the fact that there had been a prior use with the same or different patient. In the medical field, there is a continuing need to easily, safely and comfortably transport an injured person, hospital patient or injured person at the scene of an accident, using an air mattress that is not only suitable for only a single use, by a single patient, but also retains some evidence of that use so as to alert a second user to the mattresses "previously used" status.

The present invention provides a transfer mattress adapted for single use by and personal to a single patient including a single use top panel having a width, a length, and longitudinally oriented peripheral edges and a single use bottom panel having the same width, the same length, longitudinally oriented peripheral edges and a plurality of perforations. The longitudinally oriented peripheral edges of the single use top and bottom panels are sealingly fastened often by heat sealing, stitching, or adhesives. Each panel is formed, at least in part, from a cold water insoluble, hot water soluble and/or dispersible, disposable film or fabrics formed from a miscible polymeric resin blend.

In one embodiment, the panels comprise a cold water soluble partially hydrolyzed polyvinyl alcohol, cold water insoluble hot water disintegrable aliphatic polyester, and minor proportions of processing and performance aids. The aliphatic polyester has a melt temperature, i.e., a liquid soluble temperature, above the normal body temperature of a human (37 degrees C.; 98.6 degrees F.) and is present in the resin blend at a concentration sufficient to constitute the continuous phase of the blend, with the polyvinyl alcohol constituting a discontinuous phase of the blend. The aliphatic polyester renders the resin blend, and the partially hydrolyzed polyvinyl alcohol in the blend is, cold water insoluble and determines the temperature at which articles formed from the blend will be subject to dissolution in an aqueous bath and subsequent disposal. A plurality of baffles, each having a width and a length, are attached to an inner surface of the single use top panel and an inner surface of the single use bottom panel so as to be transversely oriented between the top sheet and the bottom. The baffles along with the widths of the top and bottom panels define a radially-outwardly curved perimeter wall that is disposed between an edge of the baffles and the sealed peripheral edges of the top and bottom panels.

These and other features and advantages of the present invention will be more fully disclosed in, or rendered obvious by, the following detailed description of the preferred embodiment of the invention, which is to be considered together with the accompanying drawings wherein like numbers refer to like parts and further wherein:
Fig. 1 is a perspective view of a single patient, personal use transfer mattress formed in accordance with the present invention;
Fig. 2 is a partially broken-way, perspective view of the transfer mattress shown in Fig. 1;
Fig. 3 is a top elevational view of a bottom panel formed in accordance with the present invention;
Fig. 4 is a top elevational view of a top panel formed in accordance with the present invention;
Fig. 5 is a cross-sectional view, as taken along lines 5 - 6 in Fig. 2, showing a baffle and a dimensional relationship of a radially-outwardly curved perimeter wall to the mattress as a whole;
Fig. 6 is a broken-way cross-sectional view of the single single patient, personal use transfer mattress shown in Figs. 5 and 2, with an enlarged portion shown encircled so as to illustrate substantially permanently stainable outer surface fibers;
Fig. 7 is a cross-sectional view, as taken along lines 5 - 5 in Fig. 2, showing a baffle and a dimensional relationship of a radially-outwardly curved perimeter wall to the mattress as a whole, wherein the top and bottom panels are sewn together with a soluble thread;
Fig. 8 is a broken-way cross-sectional view of the single patient, personal use transfer mattress shown in Figs. 5 and 2, with an enlarged portion shown encircled so as to illustrate substantially permanently stainable outer surface fibers, wherein the top and bottom panels are sewn together with a soluble thread; and

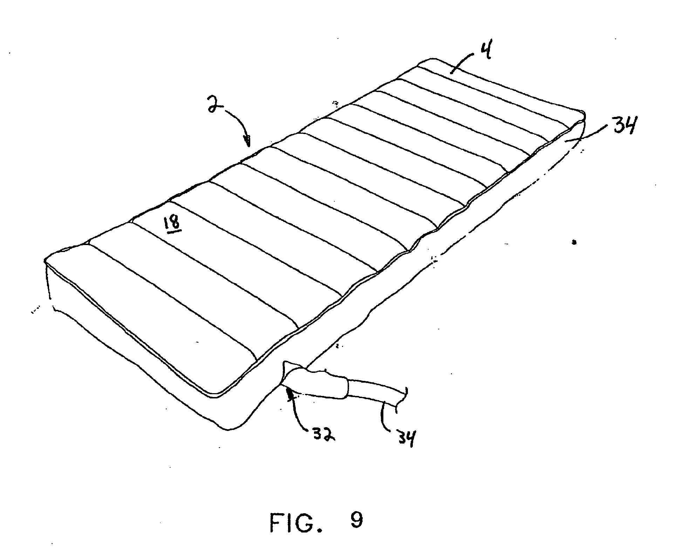

Fig.9 is a perspective view of an alternate embodiment of a single patient, personal use transfer mattress formed in accordance with the present invention, in which the mattress is formed with a perimeter band.

This description of preferred embodiments is intended to be read in connection with the accompanying drawings, which are to be considered part of the entire written description of this invention. The drawing figures are not necessarily to scale and certain features of the invention may be shown exaggerated in scale or in somewhat schematic form in the interest of clarity and conciseness. In the description, relative terms such as "horizontal," "vertical," "up," "down," "top" and "bottom" as well as derivatives thereof (e.g., "horizontally," "downwardly," "upwardly," etc.) should be construed to refer to the orientation as then described or as shown in the drawing figure under discussion. These relative terms are for convenience of description and normally are not intended to require a particular orientation. Terms including "inwardly" versus "outwardly," "longitudinal" versus "lateral" and the like are to be interpreted relative to one another or relative to an axis of elongation, or an axis or center of rotation, as appropriate. Terms concerning attachments, coupling and the like, such as "connected" and "interconnected," refer to a relationship wherein structures are secured or attached to one another either directly or indirectly through intervening structures, as well as both movable or rigid attachments or relationships, unless expressly described otherwise. The term "operatively connected" is such an attachment, coupling or connection that allows the pertinent structures to operate as intended by virtue of that relationship. In the claims, means-plus-function clauses, if used, are intended to cover the structures described, suggested, or rendered obvious by the written description or drawings for performing the recited function, including not only structural equivalents but also equivalent structures.

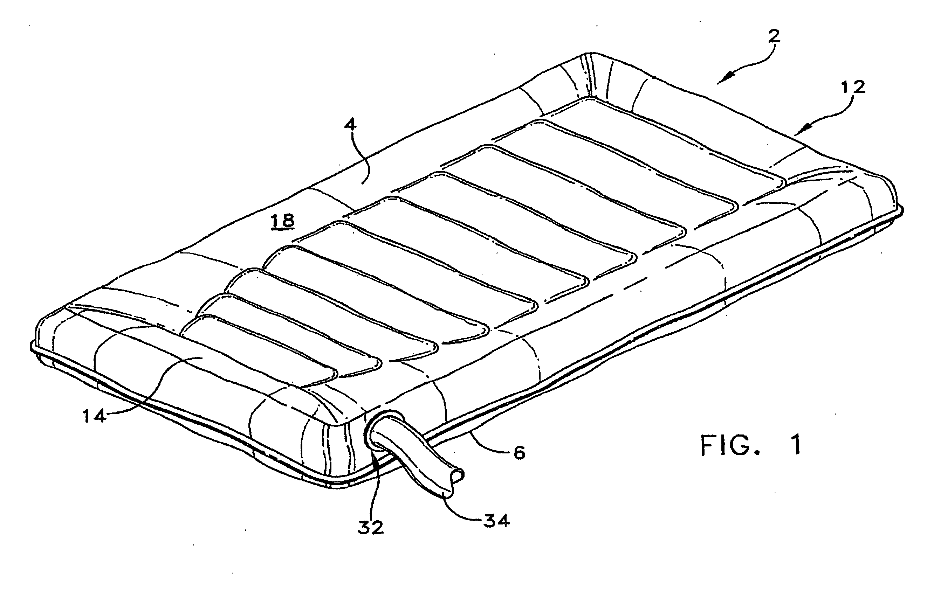

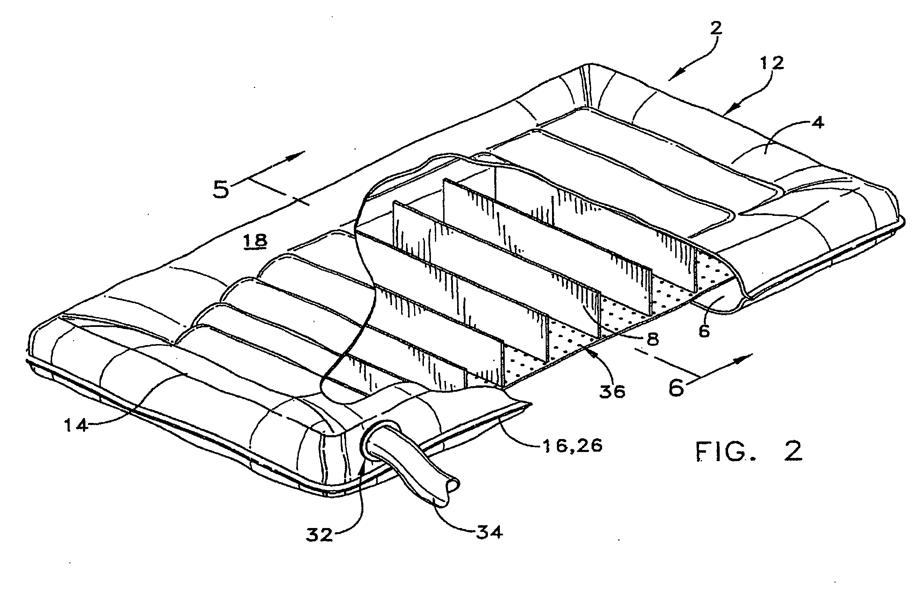

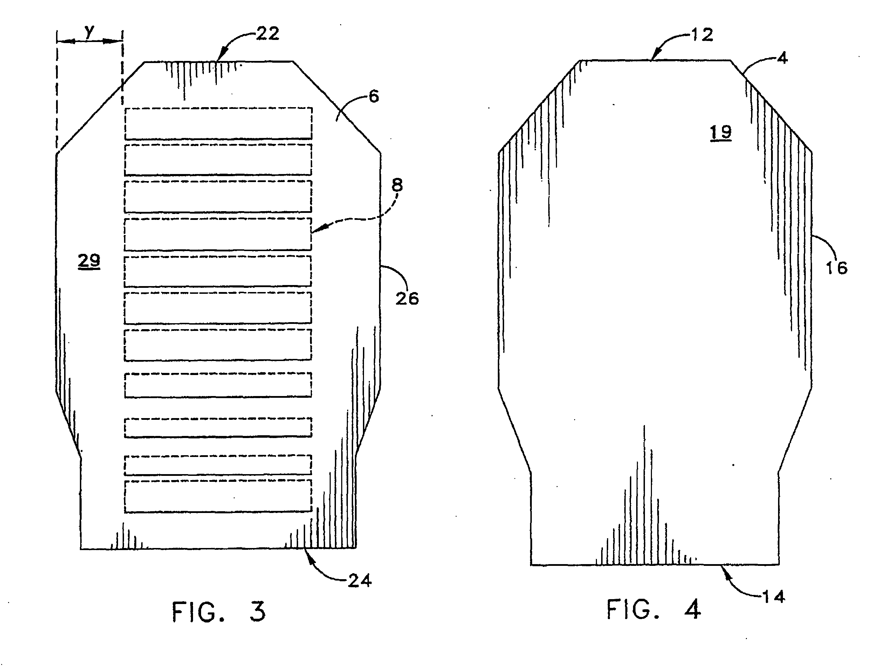

Referring to Figs. 1-4, a single patient, personal use transfer mattress 2 formed in accordance with one embodiment of the present invention comprises a top panel 4, a bottom panel 6, and a plurality of baffle-panels 8. More particularly, top panel 4 comprises a head portion 12, a foot portion 14, and a peripheral edge 16, and is formed from a sheet of often stainable fabric, i.e., a woven or entangled mass of fibers, or a film that is highly susceptible to staining by, e.g., semi-solids and liquids, such as, blood, urine, feces, hospital strength disinfecting compounds, alcohol, or the like on outer surface fibers or coatings 20. In some embodiments, nylon twill may be used with adequate results.

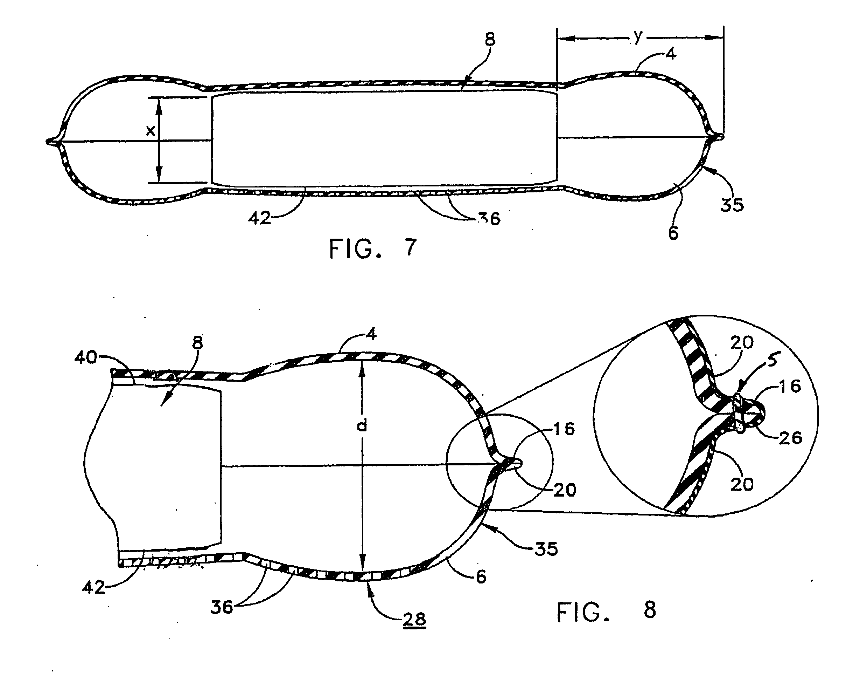

Where patient use lasting less than twenty four hours is desired, fibers for forming top panel 4 or threads 5 used to sew top panel 4 to other portions of transfer mattress 2 may be at least partially made or formed from a cold water insoluble, hot water soluble and/or dispersible, disposable film or fabrics formed from a miscible polymeric resin blend. Such panels or threads 5 may, for example, comprise a cold water soluble partially hydrolyzed polyvinyl alcohol, cold water insoluble hot water disintegrable aliphatic polyester, and minor proportions of processing and performance aids. The aliphatic polyester has a melt or liquid soluble temperature above the normal body temperature of a human (37 degrees C.; 98.6 degrees F.) and is present in the resin blend at a concentration sufficient to constitute the continuous phase of the blend, with the polyvinyl alcohol constituting a discontinuous phase of the blend. The aliphatic polyester renders the resin blend, and the partially hydrolyzed polyvinyl alcohol in the blend is, cold water insoluble and determines the temperature at which articles formed from the blend will be subject to dissolution in an aqueous bath and subsequent disposal. A practical benefit associated with the use of the foregoing preferred material is that transfer mattresses 2 not only retains a stained and discolored appearance for longer periods of time after use thereby alerting hospital staff or other care givers that a particular transfer mattress 2 has completed its useful life, and must be discarded, but also if an attempt is made to launder the mattress after a single use either top panel 4, bottom panel 6 or soluble threads 5 (Fig. 8) that are used to sew them together disintegrate during the washing process.

Bottom panel 6 comprises a head portion 22, a foot portion 24, and a peripheral edge 26, that is also formed from fibers comprising any of the foregoing substantially permanently stainable materials. An inlet opening 32 is formed in a corner portion of transfer mattress 2, and may be a closable opening that sealingly accepts an air supply hose 34. Inlet opening 32 is sized and shaped so that air supply hose 34 may be inserted, with the inlet being thereafter snapped shut or otherwise closed to hold air supply hose 34 in place while transfer mattress 2 is being inflated. Inlet opening 32 may also include a valve (not shown) that is biased to be normally closed to prevent air from exiting through the inlet, and opened when air supply hose 34 is inserted into inlet opening 32. Other arrangements known to those skilled in the art may be used to inflate transfer mattress 2.

Bottom panel 6 also includes a plurality of tiny holes 36 that are defined through its thickness to allow air, that is supplied by a low-pressure air supply to transfer mattress 2, via air supply hose 34, to escape in a controlled manner. The air supplied to transfer mattress 2 escapes through plurality of holes 36, providing a weight-bearing cushion of air that facilitates the sliding of transfer mattress 2 along a surface, as well as, from one surface to another.

Plurality of baffle-panels 8 each comprise substantially rectangular sheets comprising any of the foregoing substantially permanently stainable materials, and include a top edge 40 and a bottom edge 42. Baffle-panels 8 may have differing widths, depending upon their position within transfer mattress 2. Each top edge 40 is fastened, e.g., stitched with soluble thread, transversely to a portion of inner surface 19 of top panel 4, and each bottom edge 42 is fastened, e.g., stitched with soluble thread 5, transversely to a portion of inner surface 29 of bottom panel 6, as will hereinafter be disclosed in further detail.

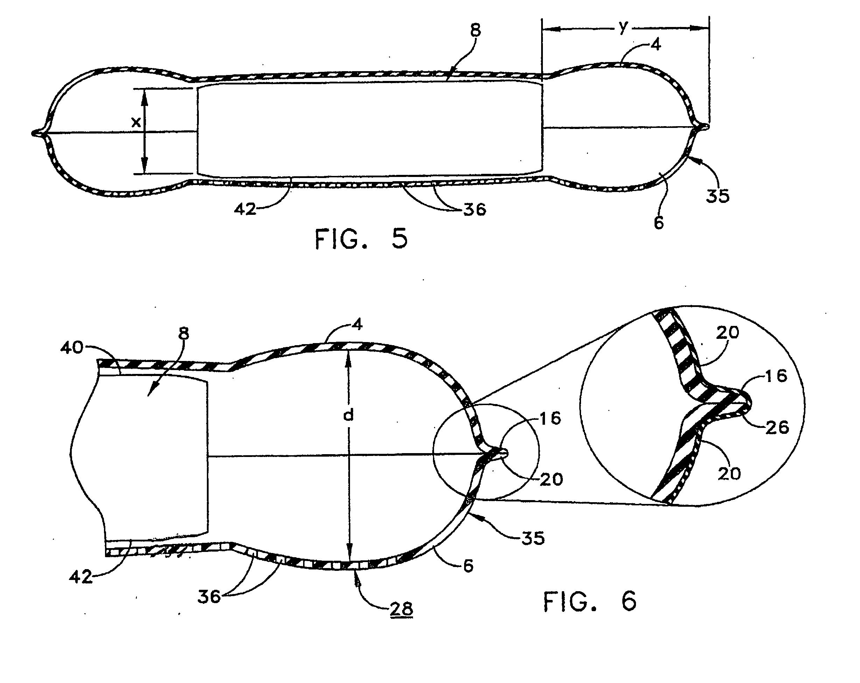

A single patient, personal use transfer mattress 2 is assembled according to the present invention in the following manner. Bottom panel 6 is laid out on a suitable support surface so that baffle-panel 8 may be transversely arranged in the center section of inner surface 29. Once in this position, bottom edge 42 of each baffle-panel 8 is fixedly fastened to inner surface 29 of bottom panel 6. Baffle-panels 8 are often heat sealed, sewn, glued, or otherwise bonded together along the interface between bottom edge 42 and inner surface 29 of bottom panel 6. When top panel 4 and bottom panel 6 are not formed from soluble materials as disclosed hereinabove, they may be sewn together or glued with materials that are soluble. Heat sealing may be done with the application of heat or ultra sonic energy at the edge interface. In this way, an interface structure (Fig. 6) is formed between top edge 16 and bottom edge 26 so as to form a bond that is resistant to rupture under normal loading for a short period of time, i.e., approximately twenty-four to thirty-six hours. Of course, it will be understood that when top panel 4 and bottom panel 6 are formed from a nylon twill or the like insoluble material, and sewn together with a cold water insoluble, hot water disintegrable aliphatic polyester thread 5, the nylon twill panels will simply separate when laundered (Fig. 8).

Once plurality of baffle-panels 8 are fastened to inner surface 29 of bottom panel 6, top panel 4 is arranged in overlying confronting relation with bottom panel 6 so that head portion 12 of top panel 4 is confronting head portion 22 of bottom panel 6 and foot portion 14 of top panel 4 is confronting foot portion 24 of bottom panel 6. Once in this position, each top edge 40 of each baffle-panel 8 is fixedly fastened to inner surface 29 of top panel 4. In order to complete construction of transfer mattress 2, it is necessary to either sealingly fasten peripheral edge 16 of top panel 4 to peripheral edge 26 of bottom panel 6 (Figs. 5-8) or to sealingly fasten both peripheral edge16 and 26 to an intermediate panel band that extends between them. Significantly, in order to prevent a person from rolling off transfer mattress 2 during sliding, it has been found to be advantageous to create a radially outwardly curved perimeter wall or "pontoons" 35 that extend longitudinally from head portion 22 to foot portion 24 on either side of baffle-panels 8.

The creation of an appropriately expanded peripheral pontoon 35 adjacent the ends of the transverse baffle-panels 8 provides several advantages. It helps to raise the sides of inflated transfer mattress 2, so as to give the person supported thereon a feeling of security, as well as, actual security in opposing rolling of the person off the inflated device. In addition, the pronounced curvature of pontoon 35 provides for a reduced contact area between mattress 2 and the underlying support surface, so as to reduce drag. A pair of substantially parallel peripheral pontoons 35, located at the ends of transverse baffle-panels 8 provides a slight relative restriction to air passing to the central chambers during inflation, thereby decreasing the tendency of the device to "balloon", i.e., where the load is jacked or raised up so high that it becomes unbalanced on the footprint formed by the central portion of mattress 2. Pontoons 35 also provide for efficient feeding of low-pressure air to all the central chambers defined by baffle-panels 8 at once, effectively encouraging more uniform inflation of those central chambers, even while slightly restricting or slowing down the feeding of air to them. Pontoons 35 also provide enhanced stiffness to the entire transfer mattress, making it easier to handle when inflated. Thus forming pontoon 35 according to this relationship provides for significantly improved sliding movement of transfer mattress 2 during use.

It is to be understood that the present invention is by no means limited only to the particular constructions herein disclosed and shown in the drawings, but also comprises any modifications or equivalents within the scope of the claims.

## Claims

1. **Single use transfer mattress** comprising
a top panel (4) having a width, a length, and longitudinally oriented peripheral edges (16); and a bottom panel (6) having said width, said length, and longitudinally oriented peripheral edges (26) and a plurality of perforations (36); wherein said longitudinally oriented peripheral edges (16,26) of said top and bottom single-use panels (4,6) are fastened together;
wherein said top and bottom panels (4,6) are formed from a sheet of fabric having at least a portion formed from a cold water insoluble, hot water soluble and/or dispersible, disposable film or fabrics formed from a miscible polymeric resin blend.

2. Single use transfer mattress according to claim 1, the top and bottom panels (4,6) comprising a cold water soluble partially hydrolyzed polyvinyl alcohol, cold water insoluble hot water disintegrable aliphatic polyester, or blends thereof.

3. Single use patient transfer mattress according to claim 1, wherein a plurality of baffles (8) is provided and each comprises a substantially rectangular sheet that is sewn to said top and bottom panels (4,6) with a cold water insoluble, hot water disintegrable aliphatic polyester thread (5).

4. Single use patient transfer mattress according to claim 1, wherein baffles (8) are fastened transversely to a portion of an inner surface of said top panel (4) and to a portion of an inner surface of said bottom panel (6).

5. Single use patient transfer mattress according to claim 1, wherein said longitudinally oriented peripheral edges (16,26) of said top and bottom panels (4,6) are sealingly fastened along an interface structure that is resistant to rupture.

6. Single use patient transfer mattress according to claim 5, wherein said sealingly fastening is with the application of at least one of sewing, glue, or heat and ultra-sonic energy.

## Patentansprüche

1. **Transfermatratze zum Einmalgebrauch** mit:
einer oberen Stoffbahn (4) mit einer Breite, einer Länge und in Längsrichtung ausgerichteten Außenkanten (16) und einer unteren Stoffbahn (6) mit der Breite, der Länge und in Längsrichtung ausgerichteten Außenkanten (26) sowie einer Mehrzahl Perforationen (36), wobei die in Längsrichtung ausgerichteten Außenkanten (16, 26) der oberen und unteren Einweg-Stoffbahn (4, 6) aneinander fixiert sind,
wobei die obere und untere Stoffbahn (4, 6) aus einer Gewebebahn gebildet ist, die wenigstens einen Abschnitt aufweist, der aus einer wegwerfbaren Folie oder einem wegwerfbaren Gewebe besteht, die/das in kaltem Wasser unlöslich, in warmem Wasser löslich und/oder dispergierbar und aus einem mischbaren Polymer-Kombinationsharz gebildet ist.

2. Transfermatratze zum Einmalgebrauch nach Anspruch 1, wobei die Stoffbahn (4, 6) einen in kaltem Wasser löslichen, partiell hydrolysierten Polyvinylalkohol, einen in kaltem Wasser unlöslichen, in warmem Wasser auflösbaren aliphatischen Polyester oder Kombinationen daraus umfassen.

3. Patiententransfermatratze zum Einmalgebrauch nach Anspruch 1, wobei eine Mehrzahl Trennwände (8) jeweils eine im Wesentlichen rechteckige Bahn umfasst, die mit einem in kaltem Wasser unlöslichen, in heißem Wasser auflösbaren aliphatischen Polyesterfaden (5) an die oberen und unteren Stoffbahn (4, 6) genäht ist.

4. Patiententransfermatratze zum Einmalgebrauch nach Anspruch 1, wobei Trennwände (8) an einem Abschnitt einer Innenfläche der oberen Stoffbahn (4) und an einem Abschnitt einer Innenfläche der unteren Stoffbahn (6) quer fixiert sind.

5. Patiententransfermatratze zum Einmalgebrauch nach Anspruch 1, wobei die in Längsrichtung ausgerichteten Außenkanten (16, 26) der obere und untere Stoffbahn (4, 6) längs einer Grenzfläche (interface) dicht aneinander fixiert sind.

6. Patiententransfermatratze zum Einmalgebrauch nach Anspruch 5, wobei die Grenzfläche durch Anwenden von Nähen, Kleben, Wärme oder Ultraschallenergie dicht fixiert ist.

## Revendications

1. **Matelas de transfert à usage unique (2),** comprenant:
un panneau supérieur (4) présentant une largeur, une longueur et des bords périphériques orientés de façon longitudinale (16); et
un panneau inférieur (6) présentant ladite largeur, ladite longueur et des bords périphériques orientés de façon longitudinale (26) et une pluralité de perforations (36),
dans lequel lesdits bords périphériques orientés de façon longitudinale (16, 26) desdits panneaux supérieur et inférieur (4, 6) sont attachés, et
dans lequel lesdits panneaux supérieur et inférieur (4, 6) sont formés à partir d'une feuille de tissu comprenant au moins une partie constituée d'un film jetable soluble et/ou dispersible dans l'eau chaude et insoluble dans l'eau froide, ou de tissus constitués d'un mélange de résine polymère miscible.

2. Matelas de transfert à usage unique selon la revendication 1, dans lequel les panneaux (4, 6) contiennent un alcool polyvinylique partiellement hydrolysé soluble dans l'eau froide, un polyester aliphatique désintégrable dans l'eau chaude et insoluble dans l'eau froide, ou des mélanges de ceux-ci.

3. Matelas de transfert de patient à usage unique selon la revendication 1, dans lequel ladite pluralité de déflecteurs (36) comprennent chacun une feuille sensiblement rectangulaire qui est cousue auxdits panneaux supérieur et inférieur (4, 6) en utilisant un fil de polyester aliphatique désintégrable dans l'eau chaude et insoluble dans l'eau froide (5).

4. Matelas de transfert de patient à usage unique selon la revendication 1, dans lequel lesdits déflecteurs (36) sont attachés de façon transversale à une partie d'une surface intérieure dudit panneau supérieur (4) et à une partie d'une surface intérieure dudit panneau inférieur (6).

5. Matelas de transfert de patient à usage unique selon la revendication 1, dans lequel lesdits bords périphériques orientés de façon longitudinale (16, 26) desdits panneaux supérieur et inférieur (4, 6) sont attachés de façon étanche le long de leur interface.

6. Matelas de transfert de patient à usage unique selon la revendication 5, dans lequel ladite interface attachée de façon étanche comprend au moins une fixation cousue ou collée ou réalisée à chaud ou par application d'une énergie ultrasonique.
